Europäisches Patentamt

European Patent Office

Office européen des brevets

(11) Veröffentlichungsnummer: **0 160 913**
**A2**

# (12) EUROPÄISCHE PATENTANMELDUNG

(21) Anmeldenummer: **85105193.8**

(22) Anmeldetag: **29.04.85**

(51) Int. Cl.⁴: **C 08 G 18/78**
**C 08 G 18/79, C 08 L 75/04**
**C 09 D 3/72**

(30) Priorität: **08.05.84 DE 3416896**

(43) Veröffentlichungstag der Anmeldung:
**13.11.85 Patentblatt 85/46**

(84) Benannte Vertragsstaaten:
**BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Müller, Hanns Peter, Dr.**
**Im Kerberich 6**
**D-5068 Odenthal(DE)**

(72) Erfinder: **Clarenz, Werner, Dr.**
**Wagnerstrasse 21**
**D-5060 Bergisch-Gladbach 2(DE)**

(72) Erfinder: **von Gizycki, Ulrich, Dr.**
**Wiembachallee 24**
**D-5090 Leverkusen 3(DE)**

(72) Erfinder: **Wagner, Kuno, Dr.**
**Am Kiesberg 8**
**D-5090 Leverkusen 1(DE)**

(54) **Praktisch farblose, organische Polyisocyanate, Verfahren zu ihrer Herstellung und ihre Verwendung zur Herstellung von Polyurethankunststoffen.**

(57) Praktisch farblose, organische Polyisocyanate, die einen Gehalt von 0,01 bis 1 ppm (Gewicht), bezogen auf Polyisocyanat, eines im Polyisocyanat löslichen organischen Farbstoffs mit einem Absorptionsmaximum von 560 bis 590 nm oder eines Gemischs derartiger Farbstoffe aufweisen, ein Verfahren zu ihrer Herstellung durch Vermischen der Einzelkomponenten, ein weiteres Verfahren zu ihrer Herstellung durch Biuretisierung oder Trimerisierung eines Teils der Isocyanatgruppen von aliphatischen und/oder cycloaliphatischen Diisocyanaten in Gegenwart der genannten Farbstoffe, sowie ihre Verwendung zur Herstellung von Polyurethankunststoffen nach dem Isocyanat-Polyadditionsverfahren.

Croydon Printing Company Ltd.

0160913

- 1 -

BAYER AKTIENGESELLSCHAFT  5090 Leverkusen, Bayerwerk

Konzernverwaltung RP  Wr/by-c
Patentabteilung


Praktisch farblose, organische Polyisocyanate, Verfahren
zu ihrer Herstellung und ihre Verwendung zur Herstellung
von Polyurethankunststoffen

Die Erfindung betrifft praktisch farblose, organische
Polyisocyanate mit einem Gehalt von 0,01 bis 1 ppm
(Gewicht) eines im Polyisocyanat löslichen organischen
Farbstoffs mit einem Absorptionsmaximum von 560 bis
590 nm oder eines Gemischs solcher Farbstoffe, Verfahren
zur Herstellung dieser farblosen organischen Polyisocyanate und ihre Verwendung zur Herstellung von Polyurethankunststoffen nach dem Isocyanat-Polyadditionsverfahren.

Organische Polyisocyanate, insbesondere solche mit aliphatisch und/oder cycloaliphatisch gebundenen Isocyanatgruppen finden insbesondere auf dem Gebiet der Herstellung von lichtbeständigen Polyurethankunststoffen
und Lacküberzügen höchster Lichtechtheit, hoher
Kreidungsbeständigkeit und ausgezeichneter Glanzhaltung eine ausgedehnte praktische Verwendung. Für

Le A 23 077  -Ausland

diese Einsatzgebiete werden in der Praxis in der Regel Modifizierungsprodukte einfacher aliphatischer bzw. cycloaliphatischer Diisocyanate mit einem verringerten Dampfdruck eingesetzt. Derartige Modifizierungsprodukte sind beispielsweise Allophanat-, Uretdion-, Harnstoff-, Semicarbazid-, Urethan- und insbesondere Biuret- oder Isocyanuratstruktureinheiten aufweisende Polyisocyanate eines vermindertem Dampfdrucks. Bei der technischen Herstellung dieser Modifizierungsprodukte aus den entsprechenden einfachen Diisocyanaten führt oftmals die nicht ausreichende Wärmefarbbeständigkeit der Reaktionsansätze zu verfärbten, meist gelblichen bis gelben Polyisocyanaten. Diese Gelbfärbung stört, insbesondere bei der Anwendung auf dem Lackgebiet, häufig die gleichmäßige Farbgebung und ganz besonders bei pigmentierten Lacken mit Metallic-Effekt.

Wie nun gefunden wurde, ist es möglich, diese Nachteile auszuschalten, indem man den Polyisocyanaten die nachstehend näher beschriebenen, in den Polyisocyanaten löslichen Farbstoffe in ganz geringen Mengen einverleibt, so daß aus den gelblichen bis gelben Polyisocyanaten praktisch farblose Polyisocyanate resultieren.

Gegenstand der Erfindung sind praktisch farblose, gegebenenfalls als Lösung in einem inerten Lösungsmittel vorliegende, organische Polyisocyanate mit einer Hazen-Farbzahl gemäß DIN 53 409 von maximal 60 und einem Gelbwert gemäß DIN 6167 von maximal 3,0, gekennzeichnet durch einen Gehalt von 0,01 bis 1 ppm

Le A 23 077

(Gewicht), bezogen auf Polyisocyanat, eines im Polyisocyanat löslichen organischen Farbstoffs mit einem Absorptionsmaximum von 560 bis 590 nm oder eines Gemischs derartiger Farbstoffe.

Gegenstand der vorliegenden Erfindung ist auch ein 1. Verfahren zur Herstellung dieser praktisch farblosen organischen Polyisocyanate, welches dadurch gekennzeichnet ist, daß man die, gegebenenfalls in einem inerten Lösungsmittel gelösten, Ausgangspolyisocyanate mit 0,01 bis 1 ppm (Gewicht), bezogen auf Polyisocyanat, eines im Polyisocyanat löslichen organischen Farbstoffs mit einem Absorptionsmaximum von 560 bis 590 nm oder eines Gemischs solcher Farbstoffe vermischt.

Gegenstand der vorliegenden Erfindung ist auch ein 2. Verfahren zur Herstellung solcher praktisch farblosen organischen Polyisocyanate, welches dadurch gekennzeichnet ist, daß man die Herstellung von Lackpolyisocyanaten durch an sich bekannte Biuretisierung oder Trimerisierung der ihnen zugrundeliegenden Diisocyanate in Gegenwart von 0,01 bis 1 ppm (Gewicht), bezogen auf das Gewicht des bei der Biuretisierung bzw. Trimerisierung resultierenden Lackpolyisocyanats, eines im Polyisocyanat löslichen organischen Farbstoffs mit einem Absorptionsmaximum von 560 bis 590 nm oder eines Gemischs solcher Farbstoffe durchführt.

Gegenstand der vorliegenden Erfindung ist schließlich auch die Verwendung dieser praktisch farblosen organischen Polyisocyanate, gegebenenfalls in mit Blockie-

Le A 23 077

rungsmittel für Isocyanatgruppen blockierter Form, zur Herstellung von Polyurethankunststoffen nach dem Isocyanat-Polyadditionsverfahren.

Die erfindungsgemäßen Verfahren eignen sich zur Herstellung von praktisch farblosen, d.h. eine Hazen-Farbzahl gemäß DIN 53 409 von maximal 60, vorzugsweise maximal 50 und einem Gelbwert gemäß DIN 6167 von maximal 3,0, vorzugsweise maximal 2,6 aufweisenden Polyisocyanaten unter Verwendung von Ausgangspolyisocyanaten, die eine Hazen-Farbzahl von bis zu 300, vorzugsweise bis zu 250 und einem Gelbwert von bis zu 15, vorzugsweise bis zu 12,5 aufweisen. Oft ist es auch möglich, durch vollständige Kompensation der Verfärbung der Ausgangspolyisocyanate Verfahrensprodukte zu erhalten, die eine Hazen-Farbzahl von 0 und einen Gelbwert von 0 aufweisen.

Das 1. erfindungsgemäße Verfahren eignet sich grundsätzlich zur Beseitigung der Verfärbung von beliebigen organischen Polyisocyanaten, die eine Hazen-Farbzahl und einen Gelbwert der obengenannten Größenordnung aufweisen. Das Verfahren ist von ganz besonderem Interesse für modifizierte organische Diisocyanate, die oftmals nicht im völlig farblosen Zustand erhältlich sind. Hierzu gehören die bereits oben angesprochenen modifizierten Polyisocyanate und insbesondere die als "Lackpolyisocyanate" bekannten Urethan-, Biuret- oder Isocyanuratgruppen aufweisende Polyisocyanate.

Le A 23 077

Zu den in diesem Zusammenhang ein besonderes Interesse beanspruchenden, Urethangruppen aufweisenden Polyisocyanaten gehören insbesondere die Umsetzungsprodukte von (i) 2,4-Diisocyanatotoluol oder dessen technischen Gemischen mit bis zu 35 Gew.-%, bezogen auf Gesamtgemisch, an 2,6-Diisocyanatotoluol mit (ii) unterschüssigen Mengen an niedermolekularen Polyolen des Molekulargewichtsbereichs 62 bis 200, wie z.B. Ethylenglykol, 1,2-, 1,3- oder 1,4-Dihydroxybutan, Trimethylolpropan bzw. deren Gemischen, welche Umsetzungsprodukte im Anschluß an ihre Herstellung durch Dünnschichtdestillation von nicht umgesetzten überschüssigen Ausgangsdiisocyanaten befreit worden sind. Die Herstellung derartiger Urethangruppen aufweisender Polyisocyanate ist beispielsweise in DE-PS 1 090 196 beschrieben.

Zu den Biuretgruppen aufweisenden Polyisocyanaten, die im Rahmen der vorliegenden Erfindung ein besonderes Interesse beanspruchen, gehören insbesondere jene auf Basis von 1,6-Diisocyanatohexan, d.h. N,N',N"-Tris-(6-isocyanatohexyl)-biuret und seine Gemische mit höheren Homologen, wie sie beispielsweise gemäß DE-PS 1 101 394, US-PS 3 358 010 oder EP-PS 3505 zugänglich sind.

Zu den Isocyanuratgruppen aufweisenden Polyisocyanaten, die im Rahmen der vorliegenden Erfindung ein besonderes Interesse beanspruchen, gehören insbesondere die Isocyanatgruppen aufweisenden Trimerisate bzw. Mischtrimerisate auf Basis von 2,4-Diisocyanatotoluol bzw. dessen Gemischen mit bis zu 35 Gew.-%, bezogen auf

Le A 23 077

Gesamtgemisch, an 2,6-Diisocyanatotoluol, 1,6-Diisocyanatohexan oder 1-Isocyanato-3,3,5-trimethyl-5-isocyanatomethyl-cyclohexan, deren Herstellung beispielsweise in DE-PS 1 201 992, DE-PS 1 670 667, GB-PS 1 506 373, GB-PS 1 458 564, DE-PS 2 641 380, US-PS 4 324 879, US-PS 4 288 586, DE-OS 3 100 262, DE-OS 3 100 263, DE-OS 3 144 672, DE-OS 3 244 407 oder DE-OS 3 033 860 beschrieben ist.

Bei der Durchführung des 1. erfindungsgemäßen Verfahrens kommen die genannten Ausgangspolyisocyanate vorzugsweise in monomerenfreier bzw. -armer Form zum Einsatz, d.h. es handelt sich im allgemeinen um Modifizierungsprodukte der beispielhaft genannten Diisocyanate, die im Anschluß an ihre Herstellung, wie oben im Falle der Urethanpolyisocyanate bereits angeführt, vorzugsweise durch Dünnschichtdestillation von überschüssigen Ausgangsdiisocyanaten weitgehend, d.h. bis auf einen unter 1 Gew.-%, vorzugsweise unter 0,5 Gew.-% liegenden Restgehalt befreit worden sind.

Besonders bevorzugte, beim erfindungsgemäßen Verfahren einzusetzende Ausgangspolyisocyanate sind die oben bereits beispielhaft genannten Biuretpolyisocyanate auf Basis von 1,6-Diisocyanatohexan, die Isocyanuratgruppen aufweisenden Polyisocyanate auf Basis von 1,6-Diisocyanatohexan, die Isocyanuratgruppen aufweisenden Polyisocyanate auf Basis von 1-Isocyanato-3,3,5-trimethyl-5-isocyanatomethyl-cyclohexan und die Isocyanuratgruppen aufweisenden Mischtrimerisate auf Basis von Gemischen von 1,6-Diisocyanatohexan und 1-Isocyanato-3,3,5-trimethyl-5-isocyanatomethyl-cyclohexan.

**Le A 23 077**

Die beispielhaft genannten Ausgangspolyisocyanate können beim 1. erfindungsgemäßen Verfahren in Substanz oder auch in in Lösungsmitteln gelöster Form vorliegen. Geeignete Lösungsmittel sind insbesondere die üblichen Lacklösungsmittel wie z.B. Butylacetat, Methylethylketon, Methylisobutylketon, Ethylenglykol-monoethylether-acetat, Toluol, Xylol oder beliebige Gemische derartiger Lösungsmittel.

Bei den bei dem erfindungsgemäßen Verfahren zum Einsatz gelangenden Farbstoffen handelt es sich um solche, deren Absorptionsmaximum im visuellen Spektrum bei 560 bis 590 nm, vorzugsweise bei 570 bis 580 nm liegt, und die in den Polyisocyanaten bzw. deren Lösungen löslich sind, bzw. um beliebige Gemische derartiger Farbstoffe, Beispiele geeigneter Farbstoffe sind blaue bis violette Anthrachinonfarbstoffe, blaue bis violette Azofarbstoffe, blaue bis violette symmetrische Cyaninfarbstoffe oder deren Mischungen. Als besonders bevorzugt seien violette Anthrachinonfarbstoffe und/oder Mischungen von blauen und roten Anthrachinonfarbstoffen genannt. Konkrete Beispiele für derartige Farbstoffe sind das 1-Hydroxy-4-(4-tolylamino)-anthrachinon, 1,4-Diamino-2,3-diphenoxyanthrachinon (Color Index 62025), Makrolexrotviolett R oder Makrolexblau RR (1,4-Bis-(2,6-diethyl-4-methyl-phenylamino)-anthrachinon bzw. 1,8-Bis-(4-methyl-phenylamino)-anthrachinon). Der Begriff "organische Farbstoffe" soll im Rahmen der Erfindung auch organische Metallsalze, die der genannten Bedingung bezüglich des Absorptionsmaximums entsprechen, wie z.B. Kobaltnaphthenat, und die ebenfalls erfindungsgemäß geeignet sind, umfassen.

Die Menge des dem Ausgangspolyisocyanat zuzusetzenden Farbstoffs richtet sich nach dessen Farbton und nach

Le A 23 077

der Art des jeweils eingesetzten Farbstoffs, sie liegt in der Regel innerhalb des Bereichs von 0,01 bis 1 ppm, vorzugsweise von 0,1 bis 0,6 ppm, bezogen auf Ausgangspolyisocyanat. Die optimale Menge wird zweckmäßigerweise durch einige orientierte Vorversuche empirisch bestimmt.

Die Farbstoffe können den Ausgangspolyisocyanaten bzw. deren Lösungen in fester oder gelöster Form zugesetzt werden, wobei die obengenannten Lösungsmittel oder auch beispielsweise Triethylphosphat in Betracht kommen.

Gemäß dem 2. Verfahren der Herstellung der erfindungsgemäßen, praktisch farblosen Polyisocyanate werden die Farbstoffe bereits vor der Herstellung der modifizierten Lackpolyisocyanate den entsprechenden Ausgangsdiisocyanaten oder den zu ihrer Modifizierung eingesetzten Hilfsmitteln einverleibt. So ist es beispielsweise möglich, bei der Herstellung von Biuretpolyisocyanaten auf Basis von 1,6-Diisocyanatohexan den Farbstoff bzw. das Farbstoffgemisch dem zum Einsatz gelangenden 1,6-Diisocyanatohexan oder dem jeweils zum Einsatz gelangenden Biuretisierungsmittel, falls die Farbstoffe in diesem löslich sind, einzuverleiben. Ebenso ist es möglich, bei der Herstellung von Isocyanuratgruppen aufweisenden Polyisocyanaten die Farbstoffe bereits den jeweiligen Ausgangsdiisocyanaten einzuverleiben. Die Menge der hierbei eingesetzten Farbstoffe wird so bemessen, daß in den letztendlich erhaltenen Biuretgruppen bzw. Isocyanuratgruppen aufweisenden Lackpolyisocyanaten nach Entfernung der überschüssigen

Le A 23 077

monomeren Diisocyanate die Farbstoffe in einer Konzentration innerhalb der obengenannten Bereiche vorliegen. Auch hier empfiehlt sich die Durchführung einiger weniger orientierender Vorversuche.

In gewissen Fällen, insbesondere bei Vorliegen von Ethergruppen aufweisenden Lösungsmitteln wie z.B. Ethylglykolacetat kann es angezeigt sein, den erfindungsgemäßen, die erfindungswesentlichen Farbstoffe enthaltenden Polyisocyanaten ein Oxidationsschutzmittel in einer Menge von ca. 10 – 1000 ppm, bezogen auf Gesamtgemisch, einzuverleiben, um einem frühzeitigen oxidativen Abbau des Farbstoffs durch, aus dem Ether und Luftsauerstoff gebildetem Peroxid vorzubeugen. Durch Zugabe eines Oxidationsschutzmittels wird dieser oxidative Abbau der Farbstoffe verhindert. Geeignete Oxidationsschutzmittel sind beispielsweise 2,6-Di-t-butylphenol, 2,6-Di-t-butyl-4-methylphenol oder 3-(1-hydroxy-2,6-di-t-butylphenyl)-propionsäure-octadecylester.

Die nachfolgenden Beispiele dienen der weiteren Erläuterung der Erfindung. Alle Prozentangaben beziehen sich, soweit nichts anders lautendes angemerkt, auf Gewichtsprozente.

## Beispiel 1

In 100 ml Triethylphosphat werden 25,5 mg 1-Hydroxy-4-(4-tolylamino)-anthrachinon gelöst. Von dieser Stammlösung werden 1 ml Farbstofflösung abgenommen und mit 57 g Triethylphosphat und 14,2 g Wasser gemischt. Man erhält auf diese Weise das zum Einsatz kommende Biuretisierungsmittel.

In einem 3 Hals-Kolben mit Rührer, Tropftrichter und Rückflußkühler, der mit einer Gasuhr über einen Schlauch verbunden ist, werden 1008 g (6 Mol) 1,6-Diisocyanatohexan und 80 g Triethylphosphat unter Rühren und Stickstoff auf 120°C aufgeheizt. Der Stickstoffstrom wird abgestellt und es wird bei dieser Temperatur mit der Zugabe des vorbereiteten Biuretisierungsmittels begonnen. Man tröpft das Biuretisierungsmittel innerhalb von 3 Stunden bei 120°C ein. Anschließend wird der Ansatz auf 180°C aufgeheizt und 30 Minuten bei dieser Temperatur nachgerührt. Man erhält nach Abkühlen ein praktisch farbloses Rohbiuret. Der Ansatz wird anschließend zweimal bei 155°C und 0,4 mbar am Dünnschichtverdampfer vom monomeren 1,6-Diisocyanatohexan und vom Lösungsmittel befreit. Man erhält ein nahezu farbloses Biuretpolyisocyanat, welches 0,5 ppm (Gewicht) des eingesetzten Farbstoffs enthält. Das Biuretpolyisocyanat weist folgende Kenndaten auf:

| | |
|---|---|
| Viskosität (25°C): | 3823 mPa.s |
| NCO-Gehalt: | 22,4 % |
| Hazen-Farbzahl (DIN 53409): | 30 |
| Gelbwert (DIN 6167): | 1,7 |
| Restgehalt an 1,6-Diisocyantohexan: | 0,4 % |

Le A 23 077

## Vergleichsbeispiel zu Beispiel 1

Man verfährt wie in Beispiel 1 beschrieben nur mit dem Unterschied, daß das Biuretisierungsmittel ohne den Zusatz des Farbstoffs zubereitet wird. Das Biuretisierungsmittel besteht in diesem Falle also nur aus der Mischung von 14,2 g Wasser und 57 g Triethylphosphat. Nach Aufarbeitung wie im Beispiel 1 beschrieben, erhält man ein gelbes Biuretpolyisocyanatgemisch mit folgenden Kenndaten:

| | |
|---|---|
| Viskosität (25°C): | 4274 mPa.s |
| NCO-Gehalt: | 21,8 % |
| Hazen-Farbzahl (DIN 53 409): | 100 |
| Gelbwert (DIN 6167): | 4,9 |
| Restgehalt an monomeren 1,6-Diisocyanatohexan: | 0,4 % |

## Beispiel 2

1 kg einer 75 %igen handelsüblichen Lösung (Xylol-Ethylglykolacetat 1:1) eines Biuretpolyisocyanatgemisches auf Basis von 1,6-Diisocyanatohexan mit der Hazen-Farbzahl 260 und dem Gelbwert 13,0 werden mit 0,5 mg 1-Hydroxy-4-(4-tolylamino)-anthrachinon vermischt. Man erhält auf diese Weise eine klare, farblose Lösung mit der Hazen-Farbzahl 0 und dem Gelbwert 0.

## Beispiel 3

1 kg einer 90 %igen handelsüblichen Lösung (Butylacetat) eines Isocyanuratgruppen aufweisenden Polyisocyanatge-

Le A 23 077

**0160913**

mischs auf Basis von 1,6-Diisocyanatohexan mit einer
Hazen-Farbzahl von 300 und einem Gelbwert von 15
werden mit 0,6 mg 1,4-Diamino-2,3-diphenoxyanthra-
chinon vermischt. Man erhält auf diese Weise eine
klare Lösung, deren Hazen-Farbzahl 50 und deren Gelbwert 2,6 beträgt.

0160913

Patentansprüche

1. Praktisch farblose, gegebenenfalls als Lösung in einem inerten Lösungsmittel vorliegende, organische Polyisocyanate mit einer Hazen-Farbzahl gemäß DIN 53 409 von maximal 60 und einem Gelbwert gemäß DIN 6167 von maximal 3,0, gekennzeichnet durch einen Gehalt von 0,01 bis 1 ppm (Gewicht), bezogen auf Polyisocyanat, eines im Polyisocyanat löslichen organischen Farbstoffs mit einem Absorptionsmaximum von 560 bis 590 nm oder eines Gemischs derartiger Farbstoffe.

2. Praktisch farblose, organische Polyisocyanate gemäß Anspruch 1, dadurch gekennzeichnet, daß es sich bei den, den genannten Farbstoff oder das genannte Gemisch von Farbstoffen enthaltenden, Polyisocyanaten um Lackpolyisocyanate, ausgewählt aus der Gruppe bestehend aus Biuretpolyisocyanaten auf Basis von 1,6-Diisocyanatohexan, Isocyanuratgruppen aufweisenden Polyisocyanaten auf Basis von 1,6-Diisocyanatohexan, Isocyanuratgruppen aufweisenden Polyisocyanaten auf Basis von 1-Isocyanato-3,3,5-trimethyl-5-isocyanatomethyl-cyclohexan und Isocyanuratgruppen aufweisenden Polyisocyanaten auf Basis von Gemischen von 1,6-Diisocyanatohexan und 1-Isocyanato-3,3,5-trimethyl-5-isocyanatomethyl-cyclohexan, handelt.

3. Verfahren zur Herstellung von praktisch farblosen, organischen Polyisocyanaten gemäß Anspruch 1 und 2,

Le A 23 077

dadurch gekennzeichnet, daß man die, gegebenenfalls in einem inerten Lösungsmittel gelösten, Ausgangspolyisocyanate mit 0,01 bis 1 ppm (Gewicht), bezogen auf Polyisocyanat, eines im Polyisocyanat löslichen organischen Farbstoffs mit einem Absorptionsmaximum von 560 bis 590 nm oder eines Gemischs solcher Farbstoffe vermischt.

4.  Verfahren zur Herstellung von praktisch farblosen, organischen Polyisocyanaten gemäß Anspruch 2, dadurch gekennzeichnet, daß man die Herstellung der Lackpolyisocyanate durch an sich bekannte Biuretisierung oder Trimerisierung der ihnen zugrundeliegenden Diisocyanate in Gegenwart von 0,01 bis 1 ppm (Gewicht), bezogen auf das Gewicht des bei der Biuretisierung bzw. Trimerisierung resultierenden Lackpolyisocyanats, eines im Polyisocyanat löslichen organischen Farbstoffs mit·einem Absorptionsmaximum von 560 bis 590 nm oder eines Gemischs solcher Farbstoffe durchführt.

5.  Verwendung der praktisch farblosen Polyisocyanate gemäß Anspruch 1 und 2, gegebenenfalls in mit Blockierungsmittel für Isocyanatgruppen blockierter Form, zur Herstellung von Polyurethankunststoffen nach dem Isocyanat-Polyadditionsverfahren.

<u>Le A 23 077</u>